# EUROPEAN PATENT APPLICATION

(11) **EP 4 383 538 A1**
(43) Date of publication of application: **12.06.2024**
(21) Application number: 23208991.2
(22) Date of filing: 10.11.2023
(51) Int. Cl.: H02M 1/32, H02M 7/537, H02M 3/156, H02M 1/00, H02J 3/38

(54) **GRID-CONNECTED CONVERTER AND HIGH VOLTAGE RIDE THROUGH CONTROL METHOD FOR GRID-CONNECTED CONVERTER**

(30) Priority: 07.12.2022 CN 202211562645
(71) Applicant: Sungrow Power Supply Co., Ltd., Hefei, Anhui 230088 (CN)
(72) Inventor: HU, Fanyu, Hefei 230088 (CN); CAO, Jinhu, Hefei 230088 (CN)
(74) Representative: Epping - Hermann - Fischer

(57) **Abstract**

A grid-connected converter and a method for controlling a high-voltage ride-through for a grid-connected converter are provided in the present disclosure. The method includes: obtaining detection data of a voltage of a grid-connected point of the grid-connected converter; determining, based on the detection data of a voltage of the grid-connected point, whether the grid-connected converter enters a high voltage ride-through mode; and controlling an inverting circuit of the grid-connected converter to enter an off state, and controlling a converting circuit connected to a direct-current bus to switch to a state of controlling a voltage of the direct-current bus, in a case that the grid-connected converter enters the high voltage ride-through mode.

## Description

### TECHNICAL FIELD

The present disclosure relates to the technical field of power electronics, and in particular to a grid-connected converter and a method for controlling a high voltage ride-through for the grid connected converter.

### BACKGROUND

High voltage ride-through refers to an ability of the grid-connected inverter to continue operating without going off-grid within a certain range of voltage rise and time interval in a case of an increase in a voltage of a grid-connected point of the grid-connected inverter due to a power system accident or disturbance.

For example, in a normal operation of a three-phase grid-connected inverter, a voltage of a direct-current bus is controlled to be an addition of a certain voltage and a peak of a line voltage of a grid-connected point, so as to ensure an effective control of the grid- connected inverter. In a case that the power grid enters a high voltage ride-through state, an increase of the voltage of the grid-connected point causes the line voltage of the grid-connected point being greater than the voltage of the direct-current bus, so that energy from a grid side flows back to the direct-current bus.

In a case that the voltage of the direct-current bus is less than the line voltage of the grid-connected point, a filtering inductor on the alternating-current side is under a reverse voltage difference, and a grid-connected current continues to increase in reverse. In an application scenario of a deep high voltage ride-through, where the grid voltage significantly exceeds a normal rated voltage of the grid (for example, the grid voltage is greater than 1.25 times of the rated voltage), a sudden increase in the voltage of the grid-connected point occurs and cause a long-term voltage difference for the filtering inductor. In this case, an off-grid state may be caused under the overcurrent protection mechanism triggered by an excessive grid-connected current.

### SUMMARY OF THE INVENTION

In view of this, a grid-connected converter and a method for controlling a high voltage ride-through for a grid-connected converter are provided according to the present disclosure, with which a time period in which the filtering inductor is under a reverse voltage difference is reduced, and the off-grid state under the protection mechanism triggered by an excessive grid-connected current is avoided.

In order to achieve the above objectives, the following technical solutions are provided in the present disclosure.

In a first aspect of present disclosure, a method for controlling a high voltage ride-through for a grid-connected converter is provided. The method includes: obtaining detection data of a voltage of a grid-connected point of the grid-connected converter; determining, based on the detection data of a voltage of the grid-connected point, whether the grid-connected converter enters a high voltage ride-through mode; and controlling an inverting circuit of the grid-connected converter to enter an off state, and controlling a converting circuit connected to a direct-current bus to switch to a state of controlling a voltage of the direct-current bus, in a case that the grid-connected converter enters the high voltage ride-through mode.

In an embodiment, in the state of controlling a voltage of the direct-current bus, the voltage of the direct-current bus of the grid-connected converter is raised to a preset voltage.

In an embodiment, the preset voltage is related to a ride-through depth and is calculated based on the detection data of a voltage of the grid-connected point.

In an embodiment, the converting circuit is a DC-DC converting circuit connected to a photovoltaic string. The controlling a converting circuit connected to a direct-current bus to switch to a state of controlling a voltage of the direct-current bus includes: controlling the converting circuit to exit a maximum power point tracking MPPT disturbance state; and controlling the converting circuit to enter the state of controlling a voltage of the direct-current bus.

In an embodiment, the method further includes: after the controlling an inverting circuit of the grid-connected converter to enter an off state, and controlling a converting circuit connected to a direct-current bus to switch to a state of controlling a voltage of the direct-current bus, determining, based on a grid-connected current of the grid-connected converter, whether to cease the off state; and controlling, on determining to cease the off state, the inverting circuit and the converting circuit to operate normally.

In an embodiment, the determining, based on a grid-connected current of the grid-connected converter, whether to cease the off state includes: determining whether an absolute value of the grid-connected current is less than a preset threshold for a reverse current, and whether the voltage of the direct-current bus of the grid- connected converter is stable; and determining to cease the off state in a case that the absolute value of the grid-connected current is less than the preset threshold for a reverse current and/or the voltage of the direct-current bus is stable.

In an embodiment, the method further includes: on determining that the grid-connected converter enters the high voltage ride-through mode, calculating, in real time, a reference voltage of the direct-current bus of the grid-connected converter under a current voltage of the direct-current bus; and determining the reference voltage of the direct-current bus as an initial voltage of the direct-current bus in a control loop of the inverting circuit after the off state is ceased.

In an embodiment, the calculating, in real time, a reference voltage of the direct-current bus of the grid-connected converter under a current voltage of the direct-current bus includes: obtaining the reference voltage of the direct-current bus by correcting the current voltage of the direct-current bus based on a grid phase angle and a peak of a current line voltage of the grid-connected point comprised in the detection data of a voltage of the grid-connected point.

In an embodiment, the method further includes: on determining that the grid-connected converter enters the high voltage ride-through mode, clearing a loop control variable of the inverting circuit before ceasing the off state.

In an embodiment, the determining, based on the detection data of a voltage of the grid-connected point, whether the grid-connected converter enters a high voltage ride-through mode includes: determining, based on the detection data of a voltage of the grid-connected point, whether the voltage of the grid-connected point of the grid-connected converter is greater than a preset threshold for a high-voltage ride-through; and determining that the grid-connected converter enters the high voltage ride-through mode in a case that the voltage of the grid-connected point is greater than the preset threshold for a high-voltage ride-through.

In a second aspect of present disclosure, a grid-connected converter is provided, including a controller and an inverting circuit. An alternating-current side of the inverting circuit is connected to a grid-connected point of the grid-connected converter. A direct-current side of the inverting circuit is connected to an output terminal of at least one converting circuit through a direct-current bus. A bus capacitor is connected between a positive electrode and a negative electrode of the direct-current bus. An input terminal of the converting circuit is connected to a power supply. The inverting circuit and the converting circuit are controlled by the controller. The controller is configured to perform the method as described in the first aspect.

In an embodiment, the converting circuit is a DC-DC converter, and the power supply is a photovoltaic string or an energy storage battery.

In an embodiment, the converting circuit is a boost converting circuit.

In an embodiment, the inverting circuit is a three-phase full bridge converting circuit, or a three-level AC-DC converting circuit.

In an embodiment, the grid-connected converter further includes a filtering circuit connected to the alternating-current side of the inverting circuit and the grid-connected point.

In the method for controlling a high-voltage ride-through for a grid-connected converter, detection data of a voltage of the grid-connected point of the grid-connected converter is obtained, and it is determined, based on the detection data of a voltage of the grid-connected point, whether the grid-connected converter enters the high voltage ride-through mode; and the inverting circuit of the grid-connected converter is controlled to enter the off state, and the converting circuit connected to the direct-current bus is controlled to switch to the state of controlling the voltage of the direct-current bus, in a case that the grid-connected converter enters the high voltage ride-through mode. That is, the voltage of the direct-current bus is controlled by the converting circuit connected to the direct-current bus, so that the voltage difference between the voltage of the grid-connected point and the voltage of the direct-current bus is under control. Thereby, a time period in which the filtering inductor is under a reverse voltage difference is reduced, and an off-grid state under the protection mechanism triggered by an excessive grid-connected current is avoided.

### BRIEF DESCRIPTION OF THE DRAWINGS

For a clearer illustration of technical solutions in the embodiments of the present disclosure or conventional technology, the drawings to be used for describing the embodiments or the conventional technology are briefly described hereinafter. Apparently, the drawings in the following description are only some embodiments of the present disclosure. Those of ordinary skills in the art can obtain other drawings from the provided drawings without any creative effort.
Figure 1 is a schematic structural diagram of a grid-connected converter according to an embodiment of the present disclosure;
Figure 2 is a flowchart of a method for controlling a high voltage ride-through for a grid-connected converter according to an embodiment of the present disclosure;
Figure 3 is flowchart of a method for controlling a high voltage ride-through for a grid-connected converter according to another embodiment of the present disclosure; and
Figure 4 is flowchart of a method for controlling a high voltage ride-through for a grid-connected converter according to yet another embodiment of the present disclosure.

### DETAILED DESCRIPTION OF THE EMBODIMENTS

Technical solutions of embodiments of the present application are clearly and completely described hereinafter in conjunction with the drawings of the embodiments of the present application. Apparently, the embodiments described in the following are only some embodiments of the present application, rather than all embodiments. All other embodiments obtained by those skilled in the art based on the embodiments in the present disclosure without any creative work fall within the protection scope of the present disclosure.

In the present disclosure, terms "include", "comprise" or any other variants thereof are intended to be non-exclusive. Therefore, a process, method, article or device including a series of elements includes not only the elements but also other elements that are not enumerated, or further include elements inherent to the process, method, article or device. In absence of more restrictions, the elements defined by the "including a(n) ..." do not exclude presence of other identical elements in the process, method, article, or device that includes the elements.

A method for controlling a high voltage ride-through for a grid-connected converter is provided according to an embodiment. With the method, a time period in which the filtering inductor is under a reverse voltage difference is reduced, and an off-grid state under a protection mechanism triggered by an excessive grid-connected current is avoided.

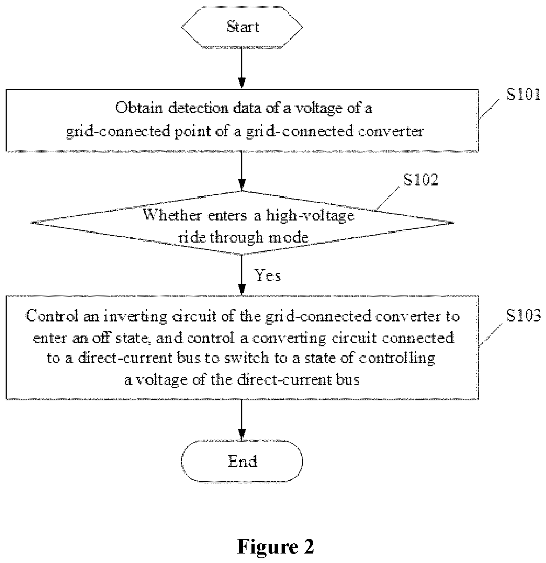

As shown in Figure 2, the method for controlling a high voltage ride-through for a grid-connected converter includes steps S101 to S103.

In S101, detection data of a voltage of a grid-connected point of the grid-connected converter is obtained.

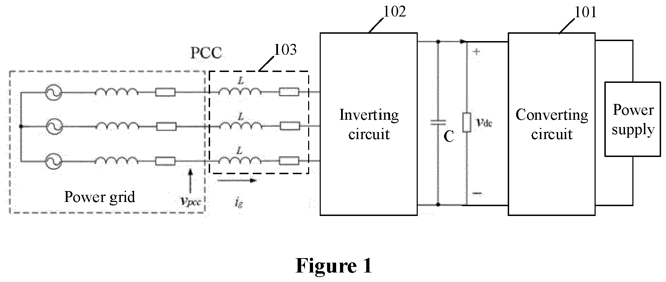

The detection data of the voltage of the grid-connected point mainly includes the voltage of the grid-connected point voltage detected in real time (Vpcc as shown in Figure 1). Based on amplitude of the voltage of the grid-connected point, it is determined, in step S102, whether the grid-connected converter enters a high voltage ride-through mode.

In S102, it is determined, based on the detection data of the voltage of the grid-connected point, whether the grid-connected converter enters a high voltage ride-through mode.

The step S102 may specifically include: determining, based on the detection data of a voltage of the grid-connected point, whether the voltage of the grid-connected point of the grid-connected converter is greater than a preset threshold for a high-voltage ride-through; and determining that the grid-connected converter enters the high voltage ride-through mode in a case that the voltage of the grid-connected point is greater than the preset threshold for a high-voltage ride-through.

The preset threshold for a high-voltage ride-through is set in advance. A specific value of the preset threshold for a high-voltage ride-through may be determined based on an actual application. In an application, the preset threshold for a high-voltage ride-through may be set to a large value, such as 1.25 times of a rated voltage of the grid, so that subsequent steps are performed only when the high-voltage ride-through has a large depth. In this case, the high-voltage ride-through mode is called a deep high-voltage ride-through mode. Alternatively, the preset threshold for a high-voltage ride-through may be set to a small value, so that the subsequent steps are performed as the high voltage ride-through occurs. The value of the preset threshold for a high-voltage ride-through is not specifically limited here, and depends on a specific application.

The method proceeds to S103 in a case that it is determined in S102 that the grid-connected converter enters the high voltage ride-through mode. The grid-connected converter operates normally in a case that it is determined in S102 that the grid-connected converter does not enter the high voltage ride-through mode.

In S103, an inverting circuit of the grid-connected converter is controlled to enter an off state, and a converting circuit connected to a direct-current bus is controlled to switch to an operation state of controlling a voltage of the direct-current bus.

As the inverting circuit enters the off state, an internal switching device of the inverting circuit is switched off. For example, in a three-phase full bridge topology, in this case, the grid-side energy charges the direct-current bus through an anti-parallel diode of the internal switching device, which is equivalent to a three-phase uncontrolled rectification process. In a case that the voltage of the grid-connected point is excessively high, the reverse grid-connected current is prone to overshoot.

Therefore, in step S103, the converting circuit connected to the direct-current bus is controlled to switch to the operating state of controlling a voltage of the direct-current bus. In a case that the grid-connected converter is a two-stage grid-connected inverter in a photovoltaic system, the converting circuit is a boost converting circuit, such as a boost module. The step S103 specifically includes: controlling the converting circuit to exit a maximum power point tracking MPPT disturbance state; and controlling the converting circuit to enter the state of controlling a voltage of the direct-current bus. In a case that the grid connected converter is coupled, via a direct-current side, to a bidirectional energy storage DC-DC converter of an energy storage system, the converting circuit may refer to such bidirectional energy storage DC-DC converter, as long as being capable of controlling the voltage of the direct-current bus.

In this case, the converting circuit is no longer in a normal operating state, and is configured to control the voltage of the direct-current bus. Thereby, the voltage of the direct-current bus is in a controlled state, and there is no excessive voltage difference between the voltage of the direct-current bus and the voltage of the grid-connected point. Therefore, magnitude of the reverse grid-connected current during the high voltage ride-through can be reduced and grid-side energy is avoided from backward-flow or overshoot.

With the method for controlling a high voltage ride-through according to the embodiment, the voltage of the grid-connected point is detected in real time, and the voltage of the direct-current bus is controlled by the converting circuit connected to the direct-current bus in the high voltage ride-through mode, so that the voltage difference between the voltage of the grid-connected point and the voltage of the direct-current bus is under control. Thereby, the time period in which the filtering inductor is under a reverse voltage difference is reduced, and the off-grid state under the protection mechanism triggered by an excessive grid-connected current is avoided.

In an application, the state of controlling a voltage of the direct-current bus in step S 103 may specifically refer to a state of raising the voltage of the direct-current bus of the grid-connected converter to a preset voltage. The preset voltage may be related to a ride-through depth that is calculated based on the detection data of a voltage of the grid-connected point.

In the photovoltaic system under the high voltage ride-through mode, the switching device of the inverting circuit stops operating and enters an off state. In this case, a boost converting circuit in the preceding stage continues to operate, and switches from the MPPT disturbance state to the state of controlling the voltage of the direct-current bus. Thereby, the voltage of the direct-current bus is raised quickly to the preset voltage, so that the time period in which the filtering inductor (L as shown in Figure 1) is under a reverse voltage difference is reduced, and the off-grid state under the protection mechanism triggered by an excessive grid-connected current ig is avoided.

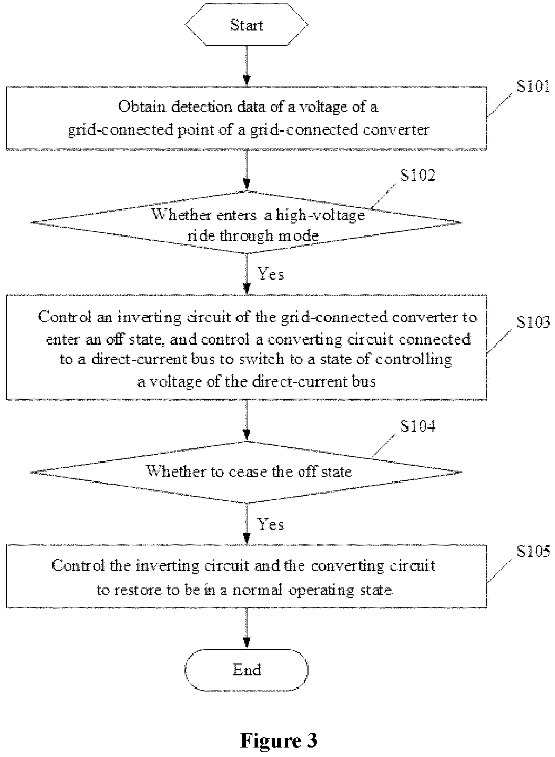

In a preferred embodiment based on the above embodiment, steps S104 to S105 are further included in the method after step S103, as shown in Figure 3.

In S104, it is determined, based on a grid-connected current of the grid-connected converter, whether to cease the off state.

The S104 may specifically include: determining whether an absolute value of the grid-connected current is less than a preset threshold for a reverse current, and whether the voltage of the direct-current bus of the grid- connected converter is stable; and determining to cease the off state in a case that the absolute value of the grid-connected current is less than the preset threshold for a reverse current and/or the voltage of the direct-current bus is stable. In an application, at least one of the above conditions may be adopted for determination, which is not limited here.

The method proceeds to S105 in a case that it is determined to cease the off state.

In S105, the inverting circuit and the converting circuit are controlled to operate normally, as when the grid-connected converter does not enter the high voltage ride-through mode.

In this case, the inverting circuit is released from the off state and the converting circuit returns to the MPPT disturbance state.

Reference is made to Figure 1. In a case that the voltage of the direct-current bus rises over the voltage of the grid-connected point, the filtering inductor L has a follow current and is under a forward voltage difference, and the grid-connected current ig decreases. In a case that the off state is ceased, as the grid-connected current ig keeps in a reverse rectification and follows and has a large value, an operation of the switching device of the inverting circuit may easily cause a change in a converter loop. Especially, in a case that the inverting circuit is a three-level converting circuit, an inductor current is directly directed into a midpoint of the direct-current bus, resulting in an shift of a midpoint potential, which is easily to cause a voltage overstress to the switching device.

In the embodiment, the off state is ceased when the voltage of the direct-current bus is stable (which means when a change of the voltage is less than preset amplitude) and the grid-connected current is decreased to a preset threshold for a reverse current. Therefore, duration of the off state may be flexibly adjusted based on the magnitude of the grid-connected current, and thereby the overstress in the switching device and a fluctuation in the voltage of the direct-current bus are avoided.

It should be noted that in the conventional technology, no reference voltage of the direct-current bus can be obtained accurately and quickly when entering the high voltage ride-through, where the reference voltage is for tracking, by a controller, of the voltage of the direct-current bus. Due to the uncertainty of a target value of the controller of the voltage of the direct-current bus and the overshoot of a control regulator in a control loop of the voltage of the direct-current bus, a fluctuations in the voltage of the direct-current bus may occur, and a transition time period for the grid-connected converter from a transient state to a steady state during the high voltage ride-through may be longer. Therefore, a control performance of the grid-connected converter is affected.

As the amplitude of a failure on the grid-side increases, the voltage of the grid-connected point in the high voltage ride-through becomes higher. In a case that the grid-connected converter enters the high voltage ride-through, the grid-side energy flows backwards and overshoots and is superimposed with the fluctuation of the control of the voltage of the direct-current bus. In this case, it is easily to cause an off-grid state of the grid-connected inverter under the overcurrent protection for the alternating-current grid-connected current or the overvoltage protection for the direct-current bus voltage, which fails to meet a standard requirement. Moreover, the direct-current bus voltage may be overvoltage and burst, resulting in serious hazards such as machine burning.

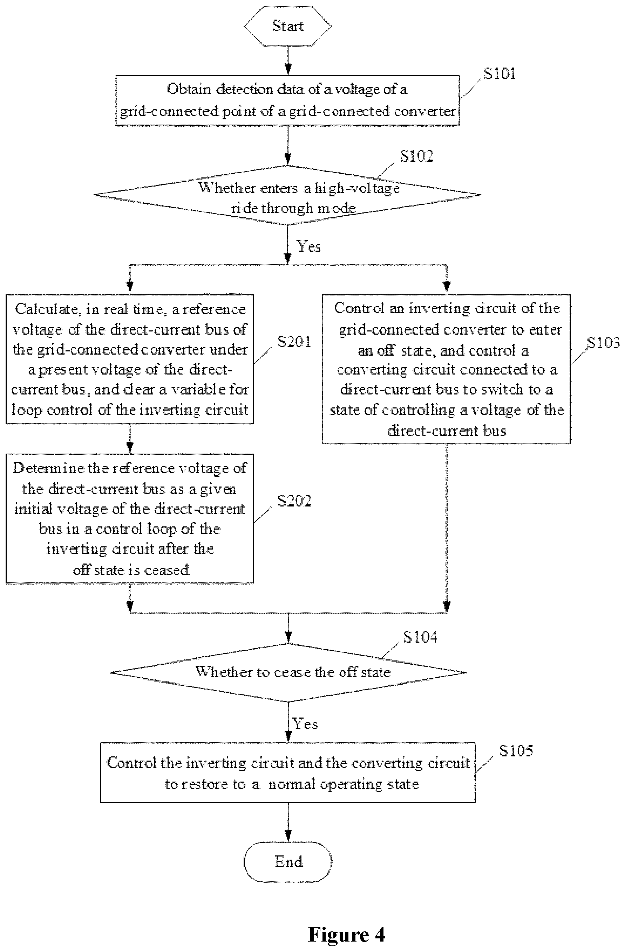

Therefore, a more preferred embodiment of the method is further provided based on the above embodiment. In this embodiment, the method further includes steps S201 and S202 on determining in S 102 that the grid-connected converter enters the high voltage ride-through mode, as shown in Figure 4.

In S201, a reference voltage of the direct-current bus of the grid-connected converter under a current voltage of the direct-current bus is calculated in a real time.

The step of calculating, in real time, a reference voltage of the direct-current bus of the grid-connected converter under a current voltage of the direct-current bus includes: obtaining the reference voltage of the direct-current bus by performing a pre-correction and post-correction on the current voltage of the direct-current bus based on a grid phase angle and a peak of a current line voltage of the grid-connected point included in the detection data of a voltage of the grid-connected point.

In an application, in a case that the grid-connected converter enters the high voltage ride-through mode after step S102, a loop control variable of the inverting circuit may be cleared before ceasing the off state. For example, the clearing operation is performed simultaneously with step S201. In a specific example, calculated values relevant to processes of the controller of the voltage of the direct-current bus in the inverting circuit before entering the off state.

In S202, the reference voltage of the direct-current bus is determined as an initial voltage of the direct-current bus in a control loop of the inverting circuit after the off state is ceased.

In an embodiment, after the off state is ceased, the inverting circuit determines the reference voltage Vdc* of the direct-current bus obtained in step S201 as a given initial value of the voltage of the direct-current bus in the controller of the voltage of the direct-current bus, so as to adjust response power of a control parameter during the high voltage ride-through.

An embodiment of the method for controlling a high voltage ride-through is illustrated hereinafter in conjunction with Figure 1 by taking a photovoltaic system as an example.

In a first step, a voltage Vpcc of a grid-connected point is detected and calculated in real time during operation of a grid-connected converter, and it is determined, based on amplitude of the voltage of the grid-connected point, whether the grid-connected converter enters control logic of a deep high voltage ride-through. It is determined that the grid-connected converter enters the deep high voltage ride-through mode, in a case that the voltage Vpcc of the grid-connected point is greater than a set threshold for the deep high voltage ride-through (i.e. the above-mentioned preset threshold for a high-voltage ride-through).

In a second step, in a case that the grid-connected converter enters the deep high voltage ride-through mode, the grid-connected converter first enters logic of switching off an inverting circuit. All inverter power switching devices are switched off, and a boost module at a preceding stage is controlled to cease an MPPT disturbance state. Thereby, the grid-connected converter is switched to a state of controlling a voltage of the direct-current bus, and boost of the voltage of the direct-current bus is controlled. Moreover, a threshold of the boost of the voltage of the direct-current bus (i.e. the preset voltage as mentioned above) is calculated based on a ride-through depth. In this case, the direct-current bus is charged by grid-side energy through an anti-parallel diode of a switching device in the inverting circuit, which is equivalent to a three-phase uncontrolled rectification process. In addition, the boost module boosts and charges the direct-current bus, until the voltage of the direct-current bus reaches the set threshold of boost.

In a third step, during the off state of the inverting circuit, all calculated components in a regulator for control of the voltage of the direct-current bus are cleared, and the voltage of the direct-current bus, a peak of a current line voltage of the grid-connected point, and a grid angle are sampled and calculated in real time. An initial reference voltage Vdc* of the direct-current bus is calculated based on the voltage of the direct-current bus, the peak of the current line voltage of the grid- connected point, and the grid angle sampled in real time.

In a fourth step, amplitude of a three-phase grid-connected current is detected in real time. In a case that it is determined to cease following of a reverse current of the grid when the reverse grid-connected current is less than a set threshold (i.e., the preset threshold for a reverse current as mentioned above), the logic of off state is ceased, and the initial reference voltage Vdc* of the direct-current bus calculated in the third step is assigned to the regulator for control of the voltage of the direct-current bus. Then the reference voltage is adjusted based on the voltage of the grid-connected point. In this way, it is ensured that regulation by the regulator is based on the reference voltage Vdc* of the direct-current bus. The output of overshoot amplitude from the regulator is significantly reduced, ensuring a stability of the voltage of the direct-current bus. In addition, the power response of the grid-connected converter is controlled based on a requirement on power characteristics during the high voltage ride-through. The high voltage ride-through control mode is ceased when the voltage Vpcc of the grid-connected point restores to be in a normal operating range.

According to the method for controlling a high voltage ride-through, the logic of off state is applied when the grid-connected converter enters the high voltage ride-through. The voltage of the direct-current bus is quickly raised through the boost module during the off state, so that the overcurrent protection for the backward current of the grid is avoided. In the off state, the voltage of the direct-current bus is corrected based on the voltage of the direct-current bus, the peak of current line voltage of the grid-connected point, and the grid angle sampled in real time. Additionally, the condition of ceasing the off state is set flexibly. In this way, the problem of the overshoot and fluctuation of the voltage of the direct-current bus when the grid-connected converter enters the high voltage ride-through is solved, and protective off-grid, inverter overcurrent, over-modulation, and overstress in the inverter switching device, and other problems caused by the overshoot and fluctuation are solved. Therefore, a capability of high voltage ride-through of the grid- connected converter is improved.

A grid-connected converter is provided according to another embodiment of the present disclosure. As shown in Figure 1, the grid-connected converter includes a controller and an inverting circuit 102.

An alternating-current side of the inverting circuit 102 is configured to connect to a grid-connected point PCC of the grid-connected converter. In an application, the alternating-current side of the inverting circuit 102 is connected to the grid-connected point PCC through a filtering circuit 103. The filtering circuit 103 may include a filtering inductor L and a resistor on each branch.

A direct-current side of the inverting circuit 102 is connected to an output terminal of at least one converting circuit 101 through a direct-current bus. A bus capacitor C is connected to a positive electrode and a negative electrode of the direct-current bus. The inverting circuit 102 may be a three-phase full bridge converting circuit as shown in Figure 1, or may be a three-level AC-DC converting circuit, which depends on an actual application and all shall fall within the protection scope of the present disclosure.

An input terminal of the converting circuit 101 is connected to a power supply. The converting circuit 101 may be a DC-DC converter. For example, in a photovoltaic system, the power supply is at least one photovoltaic string, and the DC-DC converter is a boost converting circuit, such as a boost module. In an application where coupling of an energy storage system is realized via the direct-current side, the power supply is an energy storage battery, and the converting circuit 101 is a bidirectional DC-DC converter.

The inverting circuit 102 and the converting circuit 101 are controlled by the controller. The controller is configured to sample, in real time, a voltage Vpcc of the grid-connected point, a voltage Vdc of the direct-current bus, a grid-connected current ig, and other parameters. Normally, the controller is configured to perform data calculation on a voltage control loop of the direct-current bus of the inverting circuit 102 and a control loop of the converter unit 101 in response to an instructions, such as a power instruction, to generate and output a control signal of the switch device and execute a protection action. Moreover, the controller is also configured to perform the method for controlling a high voltage ride-through for a grid-connected converter as described in any of the above embodiments. Specific process and principle of the method may be referred to the above embodiments and is not described in detail here.

According to an embodiment, the controller performs the method for controlling a high voltage ride-through, so that the reverse overcurrent during the deep high voltage ride-through can be suppressed and the voltage of the direct-current bus during the high voltage ride-through can be stabilized. In an implementation, at an initial time instant of the deep high voltage ride-through, the inverting circuit 102 is in the off state, and the voltage of the direct-current bus is quickly raised through the converting circuit 101. In this way, the problem of reverse and over current of the grid can be solved, off-grid of the inverter under the overcurrent protection or more serious damage due to the overcurrent is avoided, and tolerance of the grid-connected converter to the high voltage ride-through is improved. Moreover, the time period of the off state is adjusted flexibly based on the grid-connected current, so that the offset of the midpoint potential of the bus capacitor in the three-level converting circuit is avoided, and the risk of voltage overstress in the switching device when ceasing the off state is reduced. In addition, with the calculation of the reference voltage of the direct-current bus and the clearance of the calculated value in the regulator during the high voltage ride-through, the voltage of the direct-current bus remains stable throughout the high voltage ride-through, so that the overshoot of the voltage of the direct-current bus is reduced. Thereby, an over modulation, a high current distortion rate, a poor power response and other problems caused by a low bus voltage can be prevented, and the risk of high stress in the switching device and the risk of grid-off triggered by overvoltage protection caused by a high bus voltage can be prevented. Therefore, the tolerance of the converter to the high voltage ride-through is further improved.

In this specification, the same and similar parts of the embodiments may be referred to each other, and each embodiment focuses on differences from other embodiments. In particular, the system or system embodiments are similar to the method embodiments, and therefore are described in a simplified manner, and may be referred to relevant parts of the method embodiments. The above-described system and system embodiments are merely schematic. A unit described as a separate component may or may not be physically separate. Components shown as units may or may not be physical units, that is, the components may be located in a same place or may be distributed on multiple network units. Some or all modules thereof may be selected based on an actual requirement to implement an objective of the solution in the embodiments. Those skilled in the art can understand and implement the embodiments without any creative effort.

Those skilled in the art may further understand that, units and algorithm steps described in conjunction with the embodiments disclosed herein may be realized by electronic hardware, computer software or a combination thereof. In order to clearly describe interchangeability of the hardware and the software, the composition and steps of each embodiment are generally described above based on functions. Whether a function is to be implemented in a hardware form or a software form depends on a particular application of technical solutions and a design constraint. Those skilled in the art may implement the described functions through different methods for each specific application. Such implementation should not be considered going beyond the scope of the present disclosure.

The description of the embodiments herein enables those skilled in the art to implement or use the present disclosure. The features in various embodiments in this specification may be replaced or combined with each other. Various modifications to the embodiments are apparent for those skilled in the art. The general principles defined herein may be applied to other embodiments without departing from the spirit or scope of the present application. Therefore, the present application should not be limited to the embodiments disclosed herein, but has the widest scope conform to the principle and the novel features disclosed in the present disclosure.

## Claims

1. A method for controlling a high-voltage ride-through for a grid-connected converter, comprising:
obtaining detection data of a voltage of a grid-connected point of the grid-connected converter;
determining, based on the detection data of a voltage of the grid-connected point, whether the grid-connected converter enters a high voltage ride-through mode; and
controlling an inverting circuit of the grid-connected converter to enter an off state, and controlling a converting circuit connected to a direct-current bus to switch to a state of controlling a voltage of the direct-current bus, on determining that the grid-connected converter enters the high voltage ride-through mode.

2. The method according to claim 1, wherein in the state of controlling a voltage of the direct-current bus, the voltage of the direct-current bus of the grid-connected converter is raised to a preset voltage.

3. The method according to claim 2, wherein the preset voltage is related to a ride-through depth and is calculated based on the detection data of a voltage of the grid-connected point.

4. The method according to one of the previous claims, wherein:
the converting circuit is a DC-DC converting circuit connected to a photovoltaic string;
the controlling a converting circuit connected to a direct-current bus to switch to a state of controlling a voltage of the direct-current bus comprises:
controlling the converting circuit to exit a maximum power point tracking MPPT disturbance state; and
controlling the converting circuit to enter the state of controlling a voltage of the direct-current bus.

5. The method according to one of the previous claims, further comprising:
after the controlling an inverting circuit of the grid-connected converter to enter an off state, and controlling a converting circuit connected to a direct-current bus to switch to a state of controlling a voltage of the direct-current bus,
determining, based on a grid-connected current of the grid-connected converter, whether to cease the off state; and
controlling, on determining to cease the off state, the inverting circuit and the converting circuit to operate normally.

6. The method according to one of the previous claims, wherein the determining, based on a grid-connected current of the grid-connected converter, whether to cease the off state comprises:
determining whether an absolute value of the grid-connected current is less than a preset threshold for a reverse current, and whether the voltage of the direct-current bus of the grid-connected converter is stable; and
determining to cease the off state in a case that the absolute value of the grid-connected current is less than the preset threshold for a reverse current and/or the voltage of the direct-current bus is stable.

7. The method according to any one of claims 1 to 6, further comprising:
on determining that the grid-connected converter enters the high voltage ride-through mode,
calculating, in real time, a reference voltage of the direct-current bus of the grid-connected converter under a current voltage of the direct-current bus; and
determining the reference voltage of the direct-current bus as an initial voltage of the direct-current bus in a control loop of the inverting circuit after the off state is ceased.

8. The method according to claim 7, wherein the calculating, in real time, a reference voltage of the direct-current bus of the grid-connected converter under a current voltage of the direct-current bus comprises:
obtaining the reference voltage of the direct-current bus by correcting the current voltage of the direct-current bus based on a grid phase angle and a peak of a current line voltage of the grid-connected point comprised in the detection data of a voltage of the grid-connected point.

9. The method according to one of the previous claims, further comprising:
on determining that the grid-connected converter enters the high voltage ride-through mode,
clearing a loop control variable of the inverting circuit before ceasing the off state.

10. The method according to one of the previous claims, wherein the determining, based on the detection data of a voltage of the grid-connected point, whether the grid-connected converter enters a high voltage ride-through mode comprises:
determining, based on the detection data of a voltage of the grid-connected point, whether the voltage of the grid-connected point of the grid-connected converter is greater than a preset threshold for a high-voltage ride-through; and
determining that the grid-connected converter enters the high voltage ride-through mode in a case that the voltage of the grid-connected point is greater than the preset threshold for a high-voltage ride-through.

11. A grid-connected converter, comprising a controller and an inverting circuit, wherein
an alternating-current side of the inverting circuit is connected to a grid-connected point of the grid-connected converter;
a direct-current side of the inverting circuit is connected to an output terminal of at least one converting circuit through a direct-current bus;
a bus capacitor is connected between a positive electrode and a negative electrode of the direct-current bus;
an input terminal of the converting circuit is connected to a power supply;
the inverting circuit and the converting circuit are controlled by the controller; and
the controller is configured to perform the method according to any one of claims 1 to 10.

12. The grid-connected converter according to claim 11, wherein
the converting circuit is a DC-DC converter, and
the power supply is a photovoltaic string or an energy storage battery.

13. The grid-connected converter according to one of claims 11 or 12, wherein the converting circuit is a boost converting circuit.

14. The grid-connected converter according to one of claims 11 to 13, wherein the inverting circuit is a three-phase full bridge converting circuit, or a three-level AC-DC converting circuit.

15. The grid-connected converter according to any one of claims 11 to 14, further comprising:
a filtering circuit connected to the alternating-current side of the inverting circuit and the grid-connected point.
